# FASCICULE DE BREVET EUROPEEN

(11) **EP 3 468 793 B1**
(45) Date de publication et mention de la délivrance du brevet: **06.04.2022**
(21) Numéro de dépôt: 17728488.2
(22) Date de dépôt: 31.05.2017
(51) Int. Cl.: B32B 17/06, E06B 3/663, E06B 3/67, E06B 5/16

(54) **VITRAGE ANTI-FEU**
BRANDSCHUTZVERGLASUNG
FIREPROOF GLAZING

(30) Priorité: 09.06.2016 EP 16173709
(43) Date de publication de la demande: 17.04.2019
(73) Titulaire: AGC Glass Europe, 1348 Louvain-La-Neuve (BE)
(72) Inventeur: LESCOT, Thomas, 6210 Reves (BE); BOUESNARD, Olivier, 1460 Ittre (BE); BOUCHER, Nicolas, 77920 Samois Sur Seine (FR)
(86) Numéro de dépôt international: PCT/EP2017/063103
(87) Numéro de publication internationale: WO 2017/211637

(56) Documents cités:
- WO-A1-2009/007452
- DE-A1- 19 525 263
- GB-A- 2 144 167
- US-A1- 2012 090 253

## Description

L'invention concerne des vitrages feuilletés résistant au feu comprenant un matériau intumescent à base de silicates alcalins hydratés entre des feuilles de verre. Elle vise plus spécialement les vitrages dans lesquels le matériau intumescent est formé par durcissement d'une composition introduite liquide entre les feuilles de verre.

Dans ces vitrages la composition liquide est maintenue dans l'espace défini par les feuilles de verre et des moyens, dits «espaceurs» (et que nous désignerons par commodité sous ce nom dans la suite de la description) qui d'une part maintiennent les feuilles de verre à distance les unes des autres et, d'autre part, constituent avec les feuilles de verre le récipient de cette composition liquide.

Des vitrages de ce type font l'objet de nombreuses publications. C'est le cas en particulier de WO2007/107541.

Dans les différents types de vitrages résistant au feu et comprenant un matériau intumescent, les vitrages considérés se distinguent d'un autre type dans lequel le matériau intumescent est séché et durci sous forme d'une couche disposée sur un support le plus souvent une première feuille de verre, avant d'être recouverte d'une deuxième feuille de verre. Dans les vitrages concernés par l'invention le matériau intumescent est introduit sous forme liquide avant qu'il ne gélifie et se durcisse sans séchage, le plus souvent spontanément, le cas échéant avec une élévation de température ou avec une exposition à des rayonnements infra-rouges ou ultra-violets.

Cette façon de produire les vitrages présente certains avantages mais également impose des conditions particulières de mise en œuvre.

Un avantage significatif, en évitant le séchage de la composition sous forme de nappe, est un gain de temps important, le séchage pour l'autre type de produits nécessitant, notamment une longue opération dans des conditions de température et d'hygrométrie contrôlées. La durée de ces opérations de séchage allant croissant beaucoup plus que proportionnellement avec l'épaisseur de la couche, conduit pour des raisons évidentes à limiter cette épaisseur. Celle-ci est habituellement n'excède pas 1,5mm. Les propriétés de résistance au feu des vitrages sont dépendantes de l'épaisseur du matériau intumescent. Le plus usuellement pour accroître ces propriétés, des vitrages sont constitués qui comportent une pluralité de couches de matériau, chacune d'une épaisseur limitée. Dans le mode le plus simple deux feuilles de verre comportant chacune une couche intumescente séchée, sont accolées pour former un ensemble comportant une double épaisseur de matériau intumescent. Il est aussi connus de multiplier les couches intumescentes et simultanément les feuilles de verre qui les portent dans des ensemble plus complexes. Ces ensembles ont pour inconvénient d'accroître significativement l'épaisseur totale et le poids de ces vitrages.

Vis-à-vis des vitrages décrits précédemment, dans ceux constitués au moyen d'une composition coulée dans le récipient constitué par les feuilles de verre et les espaceurs, la gélification et le durcissement s'opèrent dans la masse du matériau intumescent indépendamment de son épaisseur. Les couches constituées peuvent donc présenter une épaisseur beaucoup plus importante.

Les vitrages du type considéré selon l'invention supportent néanmoins des contraintes particulières, notamment en ce qui concerne les compositions intumescentes elles-mêmes. Ces compositions qui se solidifient sans séchage sont sensiblement plus riches en eau. Cette particularité modifie le caractère «réfractaire» des couches, et conditionne en partie leurs propriétés de résistance au feu. Pour renforcer ce caractère réfractaire atténué par cette teneur en eau, il est préférable de choisir des compositions dans lesquelles le rapport molaire SiO₂/M₂O -M étant un alcalin, potassium ou sodium ou une combinaison des deux- est relativement élevé, à savoir supérieur à 4 et de préférence supérieur à 5. Les solutions commercialement disponibles de silicates alcalins sont de rapport molaire généralement moins élevé ce qui nécessite une préparation spécifique de ces compositions comme décrit par exemple dans la publication indiqué ci-dessus.

Le choix de ces compositions intumescentes qui sont mises en œuvre à l'état liquide, conduit à des vitrages dans lesquels les espaceurs restent présents même après durcissement de la composition intumescente. Le maintien des espaceurs tient compte du fait que, même durcies, ces compositions dont la teneur en eau est élevée, sont sensibles éventuellement au fluage sous leur propre poids. La structure liant les différents éléments de ce récipient doit donc offrir une bonne résistance mécanique tout au long de sa vie. En particulier les espaceurs doivent adhérer fortement aux feuilles de verre que le fluage aurait tendance à écarter dans les parties basses du vitrage.

Dans le rôle de maintien de la composition les espaceurs doivent bien entendu offrir une bonne étanchéité. Ils doivent aussi ne pas être altérés par le contact avec la composition de silicates laquelle est très fortement basique.

Différentes solutions ont été proposées pour constituer ces espaceurs notamment d'utiliser un joint extrudé de caoutchouc butyle (EP1205524). Ce type de matériau offre l'avantage de permettre une bonne adhérence aux feuilles de verre, et de compenser les irrégularités de planéité de ces feuilles, assurant ainsi une bonne étanchéité. Pour donner à ce caoutchouc des propriétés améliorées, comme la résistance aux UV, ou une résistance mécanique accrue pour maintenir la distance entre les feuilles de verre, il comporte ordinairement des charges minérales et/ou de carbone. Ces caoutchoucs offrent aussi une certaine commodité de mise en œuvre, la géométrie du joint et son application étant réalisées par extrusion directement selon les dimensions des feuilles de verre. Ces opérations se prêtent à une certaine automatisation.

L'utilisation d'espaceurs de caoutchouc butyle cependant ne permet pas d'éviter totalement une réaction avec la composition de silicate liquide, et la formation éventuelle de bulles qui nuisent à la qualité du vitrage.

Les caoutchoucs de silicone ont aussi été proposés en remplacement des caoutchoucs butyle, pour une meilleure résistance chimique au contact avec les silicates.

D'autres matériaux d'espaceurs ont été proposés, en particulier des espaceurs métalliques du type de ceux mis en œuvre dans les vitrages doubles isolants. Ils nécessitent une parfaite stabilité au contact de la composition de silicates. Certains matériaux peuvent donner lieu à une coloration de la composition par attaque du métal de l'espaceur. Par ailleurs l'utilisation de constituants métalliques dont le coefficient de dilatation thermique est sensiblement différent de celui des feuilles de verre, apparaît aussi comme déconseillé dans la littérature antérieure (EP 0 753 639). ). Même si pour ces vitrages les feuilles de verre utilisées sont trempées, le risque lors de l'épreuve au feu, est de briser les feuilles de manière prématurée en raison de ces différences de dilatation. Pour cette raison le document cité propose l'utilisation d'espaceurs en matériau céramique de coefficient de dilatation analogue à ceux des feuilles de verre.

Dans la pratique le choix comme matériau résistant au feu de vitrages comportant un silicate alcalin, aussi dénommé «water-glass», est bien entendu de profiter de la transparence propre à ces matériaux. Quel que soit l'usage de ces vitrages, que ce soit pour des fenêtres, des baies, des portes ou des cloisons, en dehors bien entendu de la résistance au feu, la qualité recherchée est la clarté transmise. Le flux de lumière visible est aussi élevé que possible. Ce flux de lumière est soit sous forme de transmission directe par transparence. Dans ce cas la vision au travers du vitrage permet de distinguer nettement les objets situés derrière le vitrage. Mais le flux de lumière peut aussi être diffus, le vitrage étant alors éventuellement plus ou moins translucide selon le degré du flux transmis par diffusion. Les deux modes de transmission peuvent aussi être combinés.

Si les feuilles de verre et les silicates alcalins peuvent présenter une transmission lumineuse très élevée, les vitrages anti-feu antérieurs du type considéré, comme rappelé ci-dessus, comportent des éléments qui n'offrent pas cette même transparence. Cette absence de transparence en dehors de réduction du flux lumineux est surtout dommageable à l'esthétique de ces vitrages s'ils ne sont pas pris dans des cadres qui les dissimulent, éléments non-transparents dont font partie notamment les espaceurs traditionnels.

Un but de l'invention est de proposer des vitrages résistant au feu constitués de feuilles de verre à la périphérie desquelles un ensemble espaceur délimite un volume rempli par une composition intumescente à base de silicates alcalins laquelle est introduite initialement liquide entre les feuilles, vitrages dont la transparence se prolonge jusque dans les éléments des espaceurs.

L'invention propose d'utiliser des espaceurs, ou au moins dont certains éléments, sont constitués dans des matériaux essentiellement transparents et qui présentent par ailleurs toutes les caractéristiques requises indiquées précédemment. Par essentiellement transparent on entend un matériau tel que les espaceurs laissent passer un flux lumineux visible d'au moins 50% du flux incident, ce flux se présentant soit en transmission soit en diffusion soit par une combinaison des deux.

Selon l'invention les matériaux constituant ces espaceurs sont de préférence tels que sous une épaisseur de 10mm ils offrent une transmission lumineuse globale (directe et diffusée) qui n'est pas inférieure à 50%, et de préférence pas inférieure à 60%.

Indépendamment de la transmission lumineuse, pour répondre au mieux à l'exigence de transparence telle qu'elle est requise des feuilles de verre et du matériau intumescent, le matériau des espaceurs présente avantageusement une diffusion lumineuse (fraction de la lumière incidente aussi qualifiée de « haze ») sous 10mm d'épaisseur, qui n'est pas supérieure à 60, et de préférence pas supérieure à 30%.

Comme indiqué précédemment, en dehors de leurs caractéristiques optiques, les espaceurs et leur mise en œuvre sont choisis pour répondre au mieux aux exigences fondamentales dans ces utilisations spécifiques.

Il est d'abord nécessaire qu'ils soient suffisamment rigides pour maintenir la distance constante entre les feuilles de verre même sous les contraintes imposées lors de la production des vitrages. Pour répondre à cette exigence les espaceurs réalisés dans ces matériaux essentiellement transparents doivent avantageusement présenter une compressibilité sous une charge de 1kg/cm² qui n'excède pas 5%. De préférence cette résistance à la compressibilité de 5% est atteinte sous une charge de 2,5kg/cm².

Le matériau de l'espaceur est choisi de façon à résister au contact de la composition de silicate dont le pH peut être de l'ordre de 10 ou plus. Dans ces conditions les propriétés du matériau, notamment ses propriétés optiques, ne doivent pas être altérées de façon significative même à une température telle que celles mises en œuvre dans les opérations conduisant au durcissement de ce silicate. En pratique ces températures ne dépassent pas 100°C et le plus souvent ne sont pas supérieures à 70°C.

Des matériaux polymères peuvent répondre à ces différentes caractéristiques. Il s'agit de poly-méthacrylates, de polycarbonates, de polyamides, de polystyrènes (sous réserves de dégagement de fumées indésirables à l'épreuve au feu), de polyesters. Ces matériaux soumis à l'épreuve au feu se dégradent en se consumant sans dégagement de fumées toxiques.

Les espaceurs transparents en matériaux polymères présentent le cas échéant l'avantage de pouvoir être mis en forme par extrusion ou moulage. Ils se prêtent aussi à la constitution des éléments constituant l'ensemble disposé à la périphérie des feuilles de verre ou à certains côtés de celles-ci, sans discontinuité entre les différents côtés de cette périphérie.

Un matériau verrier peut également constituer certains éléments du cadre espaceur.

L'espaceur est de préférence sous forme d'un profilé dont la section droite comporte deux faces planes qui sont appliquées sur les faces correspondantes des feuilles de verre. La section peut être carrée, rectangulaire pleine ou tubulaire ou encore sous forme d'un U ou d'un H.

Les dimensions de la section de l'espaceur sont telles que la distance des deux feuilles de verre s'établit entre 2 et 18mm, et le plus souvent de 2 à 12mm.

En raison de la rigidité de l'espaceur et du fait qu'il est constitué d'un matériau qui le plus souvent n'est pas naturellement adhésif, il faut interposer une colle entre les feuilles de verre et l'espaceur. Cette colle bien qu'en faible épaisseur, permet aussi d'absorber les irrégularités de planéité de feuilles de verre, et garantit l'étanchéité de l'ensemble à la composition liquide de silicate.

La colle utilisée présente avantageusement, comme l'espaceur lui-même, une bonne transparence et est peu sensible au contact avec la solution de silicate. Bien que la surface de contact soit restreinte à une mince bande correspondant à l'épaisseur de cette couche de colle, il est préférable de choisir une colle essentiellement inerte à ce contact.

Il est possible, comme précédemment, de choisir comme colle un caoutchouc de butyle ou d'isobutylène. Le choix de la colle la mieux adaptée répond encore au souhait d'une application commode sur les faces de l'espaceur. Cette colle doit être suffisamment souple contrairement à l'espaceur lui-même. L'usage de charges éventuelles utilisées dans les espaceurs antérieurs pour rigidifier ces produits n'est donc pas nécessaire, ce qui permet d'éviter certains inconvénients liés à ces charges. En particulier on évite la présence de carbone dans les colles butyle pour ne pas réduire leur transparence.

D'autres adhésifs peuvent aussi être mis en œuvre pour autant qu'ils présentent des caractéristiques analogues ou meilleures que celles des colles de butyle ou d'isobutylidène. Parmi des adhésifs possibles figurent notamment des colles de silicones. Eventuellement, compte tenu de la faible quantité mise en œuvre, il est possible d'utiliser des polyuréthanes ordinairement exclus en raison des risques possibles de dégagements toxiques à l'épreuve au feu. Des résines époxy sont également possibles ou encore des colles acryliques si la précaution est prise d'éliminer les solvants qu'ils peuvent contenir afin d'éviter qu'ils ne « polluent » la composition intumescente.

La colle est disposée entre les faces de l'espaceur et les feuilles de verre. L'épaisseur de la couche de colle est limitée à la quantité nécessaire pour assurer le contact et absorber les possibles inégalités de surface des feuilles de verre ou de l'espaceur lui-même. En pratique cette épaisseur avant pression sur les feuilles n'excède pas 1mm et de préférence pas 0,8mm.

En dehors de la colle fixant l'espaceur aux feuilles de verre et assurant l'étanchéité à la composition liquide de silicate alcalin, il est aussi usuel de disposer à la périphérie des feuilles au contact de l'espaceur, un joint qui conforte l'étanchéité et renforce le maintien des feuilles de verre. Ce joint est disposé contre la face de l'espaceur opposée à celle au contact de la composition de silicate. Traditionnellement ce joint est constitué d'un polysulfure ou d'une résine de silicone. Si ce joint n'est pas toujours aussi transparent que l'espaceur ou la colle utilisée, sa disposition à l'extrême bord du vitrage et son épaisseur relativement modeste ne constituent pas une gêne sensible par rapport à la transparence principale recherchée et qui demeure sur la très large majorité de la surface du vitrage.

En pratique la mise en œuvre d'un espaceur entièrement de même composition sur tout le pourtour du vitrage peut-être le plus commode. Néanmoins la transparence n'est pas nécessairement recherchée sur toute la périphérie selon le type d'utilisation du vitrage. C'est le cas en particulier lorsque l'un ou plusieurs côtés du vitrage se trouvent disposés dans un cadre qui lui-même n'est pas transparent. Une telle disposition peut se trouver par exemple dans les huisseries dans les parties assurant la fixation et/ou l'articulation du vitrage à une structure du bâtiment. Selon le cas la transparence de l'espaceur peut ne concerner qu'un ou plusieurs côtés de la périphérie du vitrage.

Dans la suite l'invention est décrite de manière détaillée en faisant référence aux figures annexées dans lesquelles :
- la figure 1 est en perspective une représentation schématique en coupe partielle d'un vitrage selon l'invention ;
- la figure 2a présente en coupe selon A-A de la figure 1, le bord du vitrage ;
- la figure 2b est une représentation analogue à celle de la figure 2 pour un autre espaceur ;
- la figure 3 présente un espaceur tubulaire particulier ;
- la figure 4a est analogue aux figures 2, avec un espaceur en U ;
- la figure 4b est analogue à la figure 4a, avec une disposition différente du joint de scellement ;
- les figures 5a et 5b illustrent un mode d'assemblage d'éléments d'espaceur ;
- les figures 6a et 6b illustrent un autre mode de réalisation de jonction en coin d'éléments d'espaceur.

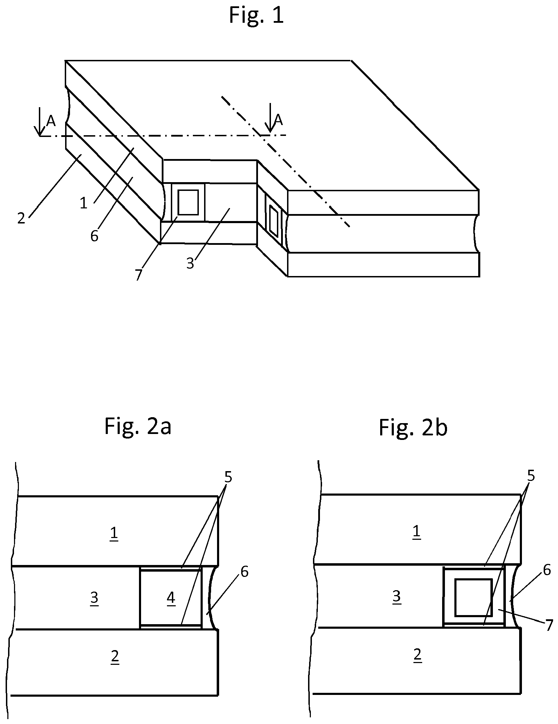

La figure 1 présente de façon schématique la composition d'un vitrage selon l'invention. Pour faciliter la compréhension de cette structure le vitrage présenté est de forme générale rectangulaire, avec un coin découpé.

Le vitrage se compose de deux feuilles de verre 1, 2. Les feuilles sont maintenues à distance l'une de l'autre par un espaceur 7 disposé à la périphérie des feuilles de verre. Le volume délimité par les feuilles de verre et l'espaceur, est rempli d'une composition intumescente 3. Lors du remplissage la composition est liquide et se solidifie soit spontanément, soit par élévation de température, soit par l'application d'UV ou d'IR, ou par une combinaison de plusieurs de ces moyens.

Pour permettre le remplissage et l'évacuation de l'air, l'espaceur 7 comporte une ou plusieurs ouvertures de petites dimensions qui sont colmatées après que l'opération est achevée.

La figure 1 présente encore un joint 6 situé contre l'espaceur 7 et qui adhère aussi aux feuilles de verre 1 et 2. Ce joint est traditionnellement destiné à renforcer la fixation des feuilles de verre et de l'espaceur du vitrage. Il fait aussi obstacle notamment à la pénétration de vapeur d'eau qui pourrait altérer la transparence de la composition intumescente par formation d'un voile sur le bord de cette composition. Les matériaux utilisés traditionnellement pour constituer ce joint sont notamment les résines de polysulfures ou celles silicone. Les dernières présentent l'avantage de permettre de conserver une certaine transparence qui contribue à la réalisation du but recherché. Dans toute la mesure du possible, même si ce joint n'est pas entièrement transparent selon les critères indiqués ci-dessus, sa position et ses dimensions ne constituent pas une gêne significative par rapport à ce but général.

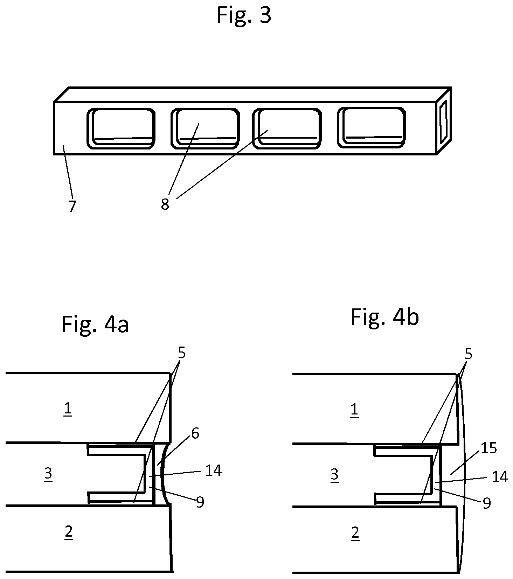

Les figures 2a, 2b, 4a et 4b montrent toutes en coupe le détail d'un bord de vitrage selon l'invention avec différentes formes d'espaceurs et de joints de renforcement et d'étanchéité.

A la figure 2a l'espaceur 4 est présenté comme constitué d'un profilé carré plein. Sur les côtés de ce profilé 4 la fixation aux feuilles de verre, qui garantit la position de l'espaceur sur les feuilles de verre et l'étanchéité à la composition intumescente liquide lors du remplissage, est obtenue par une mince couche de colle 5. De préférence la présence de cette colle est limitée aux interfaces entre les feuilles de verre et du profilé. Ceci permet de limiter au mieux le contact de la colle et du matériau intumescent 3, et les réactions possibles entre ces matériaux. Cette situation est à comparer à celle dans laquelle l'espaceur est constitué d'un cordon butyle extrudé. Dans ce dernier cas la totalité de la face de l'espaceur se trouve au contact de la composition intumescente avec les risques indiqués d'apparition de défauts, notamment de bulles.

Comme précédemment du côté extérieur au vitrage un joint 6 renforce la structure et l'étanchéité vis-à-vis de l'extérieur.

La figure 2b présente le bord d'un vitrage analogue au précédent. Les mêmes éléments sont présents à la différence de la structure du profilé constituant l'espaceur. Dans le cas présenté celui-ci est de type tubulaire 7. La mise en œuvre de ce type de structure est ordinairement suffisante pour assurer la résistance à la compression exercée sur le vitrage au moment de son assemblage pour autant que les parois du profilé soient d'une épaisseur convenablement choisie. La structure tubulaire permet aussi de réduire l'épaisseur de matériau traversé par la lumière. Cette structure est donc favorable au passage du flux lumineux (transmission et diffusion confondues), ou même à la bonne transparence de cet espaceur.

L'utilisation d'un espaceur tubulaire, si celui-ci est parfaitement étanche sur toute la périphérie, peut conduire à une surpression interne dans l'épreuve au feu. Pour éviter toute altération de l'espaceur liée à une telle surpression il est possible comme représenté à la figure 3 de ménager quelques ouvertures 8, sur la paroi de l'espaceur tournée vers l'intérieur du vitrage. Par ouvertures la composition intumescente remplit l'espaceur assurant une continuité des propriétés, et contribuant notamment à la formation de la protection lors d'une épreuve au feu jusqu'au plus près du bord du vitrage.

Les figures 4a et 4b présentent un espaceur 9 sous forme d'un profilé de section générale en U totalement ouvert du côté du matériau intumescent 3. Comme précédemment pour le profilé carré, les branches du U au contact du verre sont collées à ces feuilles par la couche de colle 5. La résistance à la pression est assurée cette fois uniquement par le seul côté 14 de l'espaceur sensiblement perpendiculaire aux faces des feuilles de verre. Comme pour l'espaceur de la figure 3, la présence de la composition dans l'espaceur minimise les différences de températures entre cet espaceur et la composition dans les épreuves au feu et limite les risques de casse prématurée des feuilles de verre.

Hors la figure 4b, le joint extérieur 6 est présenté comme appliqué sur l'espaceur et sur les faces des feuilles de verre reposant sur cet espaceur. A la figure 4b le joint 15 est disposé non seulement dans la position précédente mais s'étend également aux chants des feuilles de verre. Sur la figure le joint recouvre la totalité de ces chants. Il peut aussi de la même façon ne couvrir qu'une fraction de ces chants. La disposition de joint dans ces conditions améliore encore le renforcement de la structure et la protection contre l'atmosphère extérieure en accroissant la surface du joint adhérant aux feuilles de verre. Elle permet aussi une application qui peut être plus commode lorsque l'épaisseur de la couche intumescente est relativement limitée ménageant un faible espace pour l'application de la composition de ce joint.

Quel que soit le profil de l'espaceur, lors du remplissage de la composition liquide, celui-ci doit assurer l'étanchéité sur le pourtour des feuilles, y compris dans les coins du vitrage. Selon la nature du matériau constituant les éléments de l'espaceur, cette étanchéité est obtenue par collage soudure ou d'autres moyens assurant la continuité de l'espaceur. Ces moyens sont également mis en œuvre dans les vitrages comportant des éléments d'espaceurs de natures différentes comme indiqué plus haut.

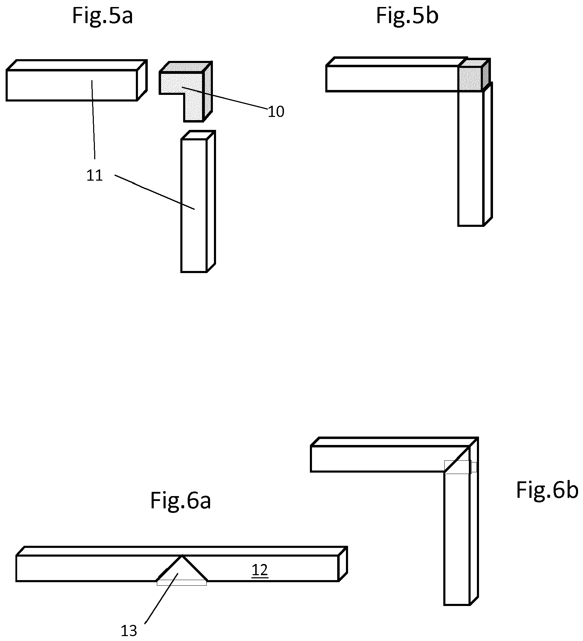

Les figures 5a et 5b illustrent un mode d'assemblage en coin pour un ensemble d'éléments 11 d'espaceur de type tubulaire. Profitant de cette structure tubulaire, l'assemblage est obtenu par exemple par l'introduction d'un élément 10 indépendant des éléments 11, aux extrémités de ceux-ci. L'élément 10 peut être constitué du même matériau que les éléments 11, ou d'un matériau différent mais de préférence présentant aussi une certaine transparence si l'assemblage ne se trouve pas dissimulé par construction dans un cadre ou la structure du bâtiment.

Bien que non représenté, l'élément 10 peut avoir une feuillure de l'épaisseur et de la profondeur d'emboîtement, de telle sorte que l'épaisseur de l'ensemble soit constante, y compris dans ce coin, favorisant l'étanchéité sans avoir recours à une surépaisseur de colle à cet endroit.

Les figures 6a et 6b présentent un autre mode de réalisation d'un coin d'espaceur. Dans ce mode l'espaceur 12, par exemple de structure tubulaire ou en U est entaillé en 13 pour ne conserver dans le coin, que la paroi de l'espaceur tournée vers l'extérieur. L'espaceur est ensuite replié comme en 6b, la paroi externe assurant la continuité. Eventuellement l'étanchéité est complétée par l'application de la colle sur la ligne constituée par les bords contigus des deux parties rapprochées par le pliage.

Les assemblages présentés ci-dessus ne sont que des exemples parmi beaucoup d'autres possibles. En particulier il est aussi possible de coller les éléments les uns aux autres, une extrémité d'un élément venant au contact et étant collé ou soudé à la face interne de l'élément voisin. Cette disposition est facilitée dans le cas d'espaceurs dont la section est pleine.

A titre d'exemple on réalise un vitrage comprenant deux feuilles de verre clair silico-sodo-calcique de 3mm d'épaisseur chacune. La distance entre les feuilles de verre est maintenue à 4mm au moyen d'un espaceur de section carrée. L'espaceur est collé sur les feuilles de verre sur le pourtour de celles-ci.

Le matériau intumescent utilisé dans cet exemple est constitué d'une solution de silicate de potassium dont le rapport molaire SiO₂/K₂O est de 5,3, la teneur en eau de 42% en poids. Cette composition comprend encore 6% en poids de glycérine, et 1% en poids d'hydroxyde de tétra-méthyl-ammonium (TMAH).

Cette composition n'est donnée qu'à titre d'exemple. Les constituants de ces compositions peuvent varier sensiblement pour autant qu'elles soient fluides pour permettre le remplissage, et durcissent dans les conditions indiquées précédemment, c'est-à-dire sans séchage. Dans ces compositions le rapport molaire (qu'il s'agisse de sodium ou de potassium ou d'un mélange des deux) est de préférence supérieur à 4 et de façon particulièrement préférée supérieur à 4,5 pour maintenir un caractère «réfractaire» suffisant, notamment compte tenu de la teneur en eau relativement élevée. Cette dernière est de préférence d'au moins 38% en poids, et de préférence d'au moins 40%.

La production de ce type de compositions intumescentes utilisées est par exemple décrite dans les publications WO2007/107541 et WO2008/145611. Elle met en œuvre l'utilisation de silice colloïdale soit ajoutée à des compositions de silicate disponibles dans le commerce, soit utilisée en réaction avec des hydroxydes alcalins.

Des matériaux utilisés selon l'invention pour constituer les espaceurs transparents sont par exemple des barres carrées en polyméthacrylate. Ces espaceurs ont un indice de réfraction de l'ordre de 1,49, très voisin des verres silico-sodo-calciques clairs (n=1,5) et une transparence même supérieure. Sous 10mm la TL dans le visible est d'environ 90-92%, contre 87% pour le verre et le «haze» ne dépasse pas 4%. Un autre matériau transparent utilisable selon l'invention est constitué par les polycarbonates connus pour leur utilisation en verres d'optiques. Leur indice de réfraction est aussi voisin de celui du verre, de l'ordre de 1,59, et leur transmission lumineuse dans le visible sous l'épaisseur de référence de 10mm est supérieure à 85%. Un autre exemple est constitué par les polyamides de nom commercial Rilsan Clear qui offre une transmission supérieure à 80% ou le polyester de nom commercial Clariflex ou encore le polyéthylène téréphtalate (PET).

Pour ces propriétés optiques ces matériaux correspondent bien aux exigences de l'invention.

## Revendications

1. Vitrage résistant au feu et comprenant deux feuilles de verre entre lesquelles se trouve un matériau intumescent à base de silicate alcalin hydraté, les deux feuilles de verre étant réunies à leur périphérie par un ensemble d'éléments délimitant entre ces deux feuilles un espace dans lequel une composition liquide du silicate alcalin est versée de manière à remplir cet espace, la composition étant choisie pour conduire à un gel solide, cette solidification étant éventuellement accélérée par une élévation de température ou une exposition à des rayons UV ou IR, les éléments délimitant cet espace étant étanches à la composition liquide de silicates, ces éléments comportant au moins un ensemble espaceur rigide ou semi-rigide déterminant la distance séparant les deux feuilles de verre, cet ensemble espaceur étant constitué pour partie au moins de la périphérie du vitrage dans un matériau essentiellement transparent à la lumière visible, le flux lumineux étant soit directement transmis soit pour partie au moins diffusé par cet ensemble espaceur, et représente au moins 50% du flux incident,
et dans lequel le matériau transparent de l'espaceur est l'un de ceux comprenant les poly-méthacrylates (PMMA), les polycarbonates, les polystyrènes, les polyamides, les polyesters.

2. Vitrage selon la revendication 1 dans lequel le matériau transparent est choisi de telle sorte qu'il présente une transmission lumineuse TL qui n'est pas inférieure à 50%, et de préférence pas inférieure à 60% sous une épaisseur de 10mm.

3. Vitrage selon l'une des revendications précédentes dans lequel le matériau transparent présente une déformation à la compression sous 1kg/cm² qui n'est pas supérieure à 5%.

4. Vitrage selon la revendication 2 ou la revendication 3 tel que sous l'épaisseur de 10mm le matériau transparent présente une diffusion lumineuse qui n'est pas supérieure à 60% et de préférence pas supérieure à 30%.

5. Vitrage selon l'une des revendications précédentes dans lequel le matériau transparent de l'espaceur est un matériau organique au contact d'une composition à pH au moins égal à 10 supportant, sans altération sensible de ses propriétés optiques, des températures de 70°C, et de préférence de 100°C.

6. Vitrage selon l'une quelconque des revendications précédentes dans lequel le vitrage est de forme rectangulaire, au moins deux côtés de l'espaceur étant en matériau transparent.

7. Vitrage selon l'une des revendications précédentes dans lequel l'ensemble de l'espaceur présente deux faces planes parallèles au plan des feuilles de verre qu'il maintient à distance.

8. Vitrage selon la revendication 7 dans lequel l'espaceur adhère aux feuilles de verre au moyen d'une colle interposée entre les faces de cet espaceur et les feuilles de verre.

9. Vitrage selon la revendication 8 dans lequel la colle est appliquée sous une épaisseur n'excédant pas 1mm, cette colle sous cette épaisseur étant essentiellement transparente.

10. Vitrage selon la revendication 9 dans lequel la colle est composée de butyle, d'isobutylène, de polyuréthane ou de silicone.

11. Vitrage selon l'une des revendications précédentes dans lequel l'espaceur présente une section transversale substantiellement rectangulaire.

12. Vitrage selon l'une des revendications précédentes dans lequel l'espaceur présente au moins dans ses parties transparentes une section transversale tubulaire.

13. Vitrage selon la revendication 12 dans lequel les parties tubulaires de l'espaceur comportent des ouvertures sur la face tournée vers la composition de silicates alcalins, permettant à cette composition de remplir l'espaceur.

14. Vitrage selon l'une des revendications précédentes dans lequel l'ensemble comprend un joint de renfort appliqué entre les feuilles sur la face de l'espaceur opposée à celle au contact de la composition de silicates alcalins.

## Patentansprüche

1. Verglasung, die feuerwiderstandsfähig ist und zwei Glasscheiben umfasst, zwischen denen sich ein intumeszierendes Material auf der Basis von wasserhaltigem Alkalisilikat befindet, wobei die beiden Glasscheiben an ihrem Rand durch eine Anordnung von Elementen verbunden sind, die zwischen diesen beiden Scheiben einen Raum begrenzen, in den eine flüssige Zusammensetzung des Alkalisilikats gegossen wird, so dass dieser Raum gefüllt wird, wobei die Zusammensetzung so gewählt ist, dass sie zu einem festen Gel führt, wobei diese Verfestigung gegebenenfalls durch eine Temperaturerhöhung oder eine Exposition gegenüber UV-oder IR-Strahlen beschleunigt wird, wobei die diesen Raum begrenzenden Elemente gegenüber der flüssigen Silikatzusammensetzung dicht sind, wobei diese Elemente mindestens eine starre oder halbstarre Abstandhalteranordnung beinhalten, die den die beiden Glasscheiben trennenden Abstand bestimmt, wobei diese Abstandhalteranordnung zumindest zu einem Teil des Rands der Verglasung aus einem bei sichtbarem Licht im Wesentlichen transparenten Material besteht, wobei der Lichtfluss entweder direkt durchgelassen oder zumindest zum Teil von dieser Abstandhalteranordnung gestreut wird und mindestens 50 % des einfallenden Flusses ausmacht, und bei welcher das transparente Material des Abstandhalters eines derjenigen ist, welche die Polymethacrylate (PMMA), die Polycarbonate, die Polystyrole, die Polyamide, die Polyester umfassen.

2. Verglasung nach Anspruch 1, bei welcher das transparente Material so gewählt ist, dass es eine Lichttransmission TL aufweist, die bei einer Dicke von 10 mm nicht weniger als 50 % und bevorzugt nicht weniger als 6o % beträgt.

3. Verglasung nach einem der vorhergehenden Ansprüche, bei welcher das transparente Material eine Verformung bei Kompression unter 1 kg/cm² aufweist, die nicht mehr als 5 % beträgt.

4. Verglasung nach Anspruch 2 oder Anspruch 3 derart, dass das transparente Material bei der Dicke von 10 mm eine Lichtstreuung aufweist, die nicht mehr als 60 % und bevorzugt nicht mehr als 30 % beträgt.

5. Verglasung nach einem der vorhergehenden Ansprüche, bei der das transparente Material des Abstandhalters ein organisches Material in Kontakt mit einer Zusammensetzung mit einem pH-Wert von mindestens 10 ist, das ohne merkliche Veränderung seiner optischen Eigenschaften Temperaturen von 70 °C und bevorzugt von 100 °C standhält.

6. Verglasung nach einem der vorhergehenden Ansprüche, bei der die Verglasung rechteckig ist, wobei mindestens zwei Seiten des Abstandhalters aus transparentem Material sind.

7. Verglasung nach einem der vorhergehenden Ansprüche, bei der die Anordnung des Abstandhalters zwei ebene Flächen aufweist, die parallel zur Ebene der Glasscheiben sind, die er auf Abstand hält.

8. Verglasung nach Anspruch 7, bei welcher der Abstandhalter an den Glasscheiben mittels eines Klebstoffs haftet, der zwischen den Flächen dieses Abstandhalters und den Glasscheiben angeordnet ist.

9. Verglasung nach Anspruch 8, bei welcher der Klebstoff in einer Dicke von nicht mehr als 1 mm aufgetragen wird, wobei dieser Klebstoff bei dieser Dicke im Wesentlichen transparent ist.

10. Verglasung nach Anspruch 9, bei welcher der Klebstoff aus Butyl, Isobutylen, Polyurethan oder Silikon zusammengesetzt ist.

11. Verglasung nach einem der vorhergehenden Ansprüche, bei welcher der Abstandhalter einen im Wesentlichen rechteckigen Querschnitt aufweist.

12. Verglasung nach einem der vorhergehenden Ansprüche, bei welcher der Abstandhalter zumindest in seinen transparenten Teilen einen röhrenförmigen Querschnitt aufweist.

13. Verglasung nach Anspruch 12, bei der die röhrenförmigen Teile des Abstandhalters Öffnungen auf der der Alkalisilikatzusammensetzung zugewandten Fläche aufweisen, die es dieser Zusammensetzung ermöglichen, den Abstandhalter zu füllen.

14. Verglasung nach einem der vorhergehenden Ansprüche, bei der die Anordnung eine Aussteifungsdichtung umfasst, die zwischen den Scheiben auf die Fläche des Abstandhalters aufgebracht ist, die entgegengesetzt zu der ist, die in Kontakt mit der Alkalisilikatzusammensetzung ist.

## Claims

1. Fire-resistant glazing comprising two glass sheets between which is an intumescent material based on hydrated alkali metal silicate, the two glass sheets being joined together at their periphery by an assembly of elements delimiting, between these two sheets, a space into which a liquid alkali metal silicate composition is poured so as to fill the space, the composition being chosen in order to result in a solid gel, this solidification optionally being accelerated by a rise in temperature or an exposure to UV or IR rays, the elements delimiting this space being leaktight to the liquid silicates composition, these elements comprising at least one rigid or semirigid spacer assembly determining the distance separating the two glass sheets, this spacer assembly being made, for part at least of the periphery of the glazing, of material essentially transparent to visible light, the light flux being either directly transmitted or partly at least scattered by this spacer assembly, and represents at least 50% of the incident flux,
and in which the transparent material of the spacer is one of those comprising polymethacrylates (PMMAs), polycarbonates, polystyrenes, polyamides and polyesters.

2. Glazing according to Claim 1, in which the transparent material is chosen so that it exhibits a light transmission L_{T} which is not less than 50% and preferably not less than 60% under a thickness of 10 mm.

3. Glazing according to either of the preceding claims, in which the transparent material exhibits a compressive strain under 1 kg/cm² which is not greater than 5%.

4. Glazing according to Claim 2 or Claim 3, such that, under the thickness of 10 mm, the transparent material exhibits a light scattering which is not greater than 60% and preferably not greater than 30%.

5. Glazing according to one of the preceding claims, in which the transparent material of the spacer is an organic material in contact with a composition having a pH at least equal to 10 withstanding, without substantial detrimental change in its optical properties, temperatures of 70°C and preferably of 100°C.

6. Glazing according to any one of the preceding claims, in which the glazing is of rectangular shape, at least two sides of the spacer being made of transparent material.

7. Glazing according to one of the preceding claims, in which the assembly of the spacer exhibits two flat faces parallel to the plane of the glass sheets, which it keeps at a distance.

8. Glazing according to Claim 7, in which the spacer adheres to the glass sheets by means of a glue interposed between the faces of the spacer and the glass sheets.

9. Glazing according to Claim 8, in which the glue is applied under a thickness not exceeding 1 mm, this glue under this thickness being essentially transparent.

10. Glazing according to Claim 9, in which the glue is composed of butyl, of isobutylene, of polyurethane or of silicone.

11. Glazing according to one of the preceding claims, in which the spacer exhibits a substantially rectangular cross section.

12. Glazing according to one of the preceding claims, in which the spacer exhibits, at least in its transparent parts, a tubular cross section.

13. Glazing according to Claim 12, in which the tubular parts of the spacer comprise openings on the face turned towards the composition of alkali metal silicates, making it possible for this composition to fill the spacer.

14. Glazing according to one of the preceding claims, in which the assembly comprises a reinforcing seal applied between the sheets on the face of the spacer opposite that in contact with the composition of alkali metal silicates.
